# EUROPEAN PATENT APPLICATION

(11) **EP 3 045 756 A1**
(43) Date of publication of application: **20.07.2016**
(21) Application number: 14888995.9
(22) Date of filing: 15.10.2014
(51) Int. Cl.: F16D 41/24

(54) **CLUTCH DEVICE**

(30) Priority: 11.04.2014 CN 201410148970
(71) Applicant: Suzhou Bafang Electric Motor Science Technology Co. Ltd, Suzhou, Jiangsu 215122 (CN)
(72) Inventor: HE, Xianbing, Suzhou Jiangsu 215122 (CN); WANG, Haihua, Suzhou Jiangsu 215122 (CN); ZHOU, Qi, Suzhou Jiangsu 215122 (CN); DING, Jun, Suzhou Jiangsu 215122 (CN); XU, Dajun, Suzhou Jiangsu 215122 (CN)
(74) Representative: Gulde & Partner
(86) International application number: PCT/CN2014/088631
(87) International publication number: WO 2015/154407

(57) **Abstract**

A clutch device comprises: a spindle (1) that is rotatably fitted with a swivel (11) through a bearing, the swivel (11) is also provided with at least two swivel gears (13) of different diameters that can rotate circumferentially around the swivel but cannot move axially, with a locking mechanism also provided between the swivel (11) and the swivel gear (13) that can secure them both together circumferentially. The clutch device of the present invention, having a plurality of clutch gears (swivel gears) of different diameters, selects the desired swivel gear to secure to the swivel circumferentially according to the needs of users, so as to obtain the reduction ratio and output torque desired by the users.

## Description

### FIELD OF THE INVENTION

The present invention relates to a clutch, which is especially applicable to bikes and electric bikes.

### BACKGROUND OF THE INVENTION

An existing common clutch such as a wedge-type unidirectional clutch is generally composed of a clutch inner ring and a clutch outer ring locked unidirectionally thereto, the clutch outer ring being provided with a clutch gear secured or integrated thereto. In actual use, the clutch gear on the clutch outer ring needs to be engaged with an outer gear to transmit torque.

However, for the existing clutch, since there is only one clutch gear provided on its clutch outer ring, the reduction ratio between the clutch and the outer gear is constant, and the drive torque is not adjustable.

### CONTENTS OF THE INVENTION

A purpose of the present invention is to provide a new clutch device, so as to solve the above problems.

A technical solution of the present invention is as follows: The clutch device as described comprises a spindle that is rotatably fitted with a swivel through a bearing; the swivel is also provided with at least two swivel gears of different diameters that can rotate circumferentially around the swivel but cannot move axially, with a locking mechanism also provided between the swivel and the swivel gear that can secure them both together circumferentially.

The locking mechanism includes a sliding bush that can be slidably sleeved axially on the spindle, and a sliding positioning device that is used to drive the sliding bush to slide axially on the spindle and can position the sliding bush axially on the spindle, with the sliding bush located in the swivel; the swivel is provided in a position corresponding to each of the swivel gears with a corresponding radial through hole, which is provided with a spring strip locked on the swivel; the spring strip is provided with a roller that is locked outside this spring strip, and is provided inside with a ball that is located in the radial through hole and can move radially along the radial through hole, with the swivel gear provided with a fit groove corresponding to the roller; the sliding bush is provided with a convex ring that, when the sliding bush slides axially on the spindle, can move outward along the radial through hole by abutting the ball and then press the spring strip to deform, so that the roller secured on the spring strip moves into the fit groove, thereby making the swivel gear secured to the swivel circumferentially.

The sliding positioning device includes a setting bolt spring sleeved on the spindle and sandwiched between the spindle and the sliding bush, a central axial hole provided on the spindle (1), a thimble arranged in the central axial hole and connected with the sliding bush, and a paddle that is fitted in contact with the thimble and used for poking the thimble to make it move axially in the central axial hole, with the paddle connected in transmission to a gear change hand lever through a shift cable.

The sliding positioning device is an electromagnetic valve.

Between the sliding bush and the spindle is provided a supporting bearing, which has a relatively rotatable bearing inner ring and bearing outer ring, the sliding bush being secured to the bearing outer ring, the bearing inner ring being axially slidably sleeved on the spindle.

Between the sliding bush and the spindle is provided a supporting bearing, which has a relatively rotatable bearing inner ring and bearing outer ring, the sliding bush being axially slidably sleeved on the bearing outer ring, the bearing inner ring being secured on the spindle.

There are totally two swivel gears.

Between the swivel and the spindle is provided a unidirectional clutch, which has a clutch inner ring and a clutch outer ring locked unidirectionally thereto, the clutch outer ring being secured to the swivel, the clutch inner ring being secured to the spindle.

The present invention has the following advantages: In actual use, this clutch device of the present invention, having a plurality of clutch gears (swivel gears) of different diameters, adjusts the locking mechanism to select the desired swivel gear to secure to the swivel circumferentially according to the needs of users, so as to obtain the reduction ratio and output torque desired by the users.

### BRIEF DESCRIPTION OF THE DRAWINGS

The present invention will be further described below with reference to drawings and examples.
Fig. 1 is a structure schematic view (a partial sectional view) of the electric-bike hub motor of this clutch device of the present invention, i.e. a practical application view of this clutch device of the present invention;
Fig. 2 is a partial structure schematic view of this clutch device of the present invention; and
Fig. 3 is another partial structure schematic view of this clutch device of the present invention.
Wherein: 1. a spindle; 2. a hub shell; 2a. a shell body; 2b. a shell end cover; 3. a stator; 4. a rotor; 5. a rotor gear; 6. a planetary carrier; 7. a planetary axle; 8. a left planetary gear; 9. a right planetary gear; 10. a sun gear; 10a. a clutch inner ring; 10b.
a clutch outer ring; 10c. a gear tooth; 11. a swivel; 12. a chain wheel; 13. a swivel gear; 14. a sliding bush; 14a. a boss; 15. a pin; 16. a thimble; 17. a setting bolt spring; 18. a central axial hole; 19. a ball; 20. a power planetary gear; and 21. a planetary gear unidirectional clutch.

### DETAILED DESCRIPTION OF THE EMBODIMENTS

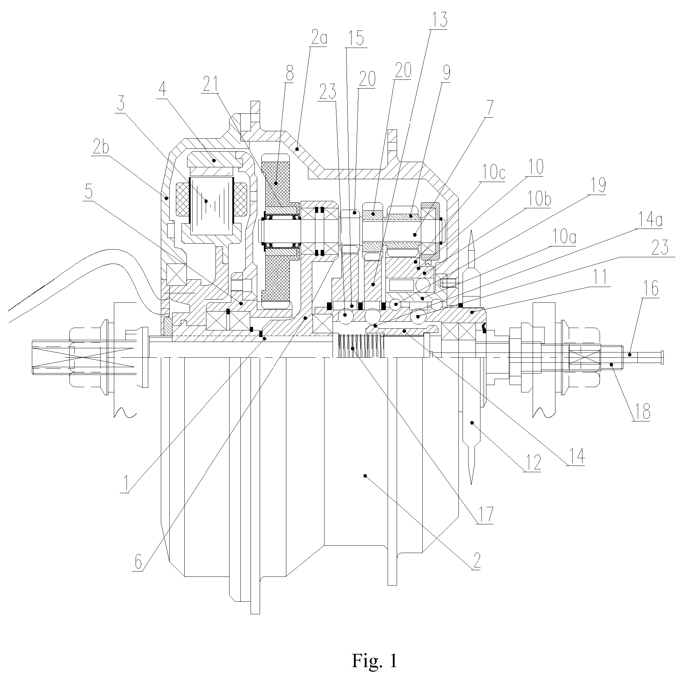

Fig. 1 shows the structure of an electric-biker hub motor provided with this clutch device of the present invention. This electric-biker hub motor includes a horizontal spindle 1, which is provided with a hub shell 2 that can rotate around this spindle through a bearing (not labeled in Fig. 1), with the hub shell 2 composed of a shell body 2a and a shell end cover 2b secured to each other. The hub shell 2 is provided inside with a stator 3, a rotor 4 and a gear reduction mechanism, wherein the stator is secured on the spindle 1, with an outer-rotor inner-stator structure adopted in this example.

A first major key improvement of this electric-biker hub motor of this example is that the gear reduction mechanism is totally different from a traditional one in structure, which is specifically as follows:
The gear reduction mechanism in this example is mainly composed of a rotor gear 5, a planetary carrier 6, a planetary axle 7, a left planetary gear 8, a right planetary gear 9 and a sun gear 10. Wherein the rotor gear 5 is rotatably coaxially sleeved on the spindle 1 and is secured to the rotor 4, with a bearing (not labeled in Fig. 1) provided between the rotor gear 5 and the spindle 1 for supporting. The planetary carrier 6 is secured on the spindle 1, and the planetary axle 7, disposed in parallel with the spindle 1, rotatably goes through the planetary carrier 6 through a bearing (not labeled in Fig. 1). There may be one or more planetary axles 7, with three planetary axles (only one can be seen in Fig. 1) in this example. With the number of the left planetary gear 8 and the right planetary gear 9 equal to that of the planetary axle 7, in order to increase the reduction ratio and the output torque, the diameter of the left planetary gear 8 is generally greater than that of the right planetary gear 9, and the left planetary gear 8 and the right planetary gear 9 are both secured (including being integrally secured) on the planetary axle 7. The sun gear 10 is rotatably coaxially sleeved on the spindle 1 and is secured to the hub shell 2. The left planetary gear 8 is engaged with the rotor gear 5, and the right planetary gear 9 is engaged with the sun gear 10.

While in operation, the motor is powered on to make the rotor rotate clockwise in the right viewing direction shown in Fig. 1, the rotor 4 drives the rotor gear 5 to rotate clockwise around the spindle 1, the rotor gear 5 then drives the left planetary gear 8 engaged therewith to rotate counterclockwise, the left planetary gear 8 then drives the planetary axle 7 and the right planetary gear 9 to rotate counterclockwise, the right planetary gear 9 then drives the sun gear 10 engaged therewith to rotate clockwise, and the sun gear 10 then drives the hub shell 2 secured thereto to rotate clockwise, thus making the electric-bike hub rotate clockwise forward.

It is easy to see that, this gear reduction mechanism in this example can achieve multi-stage reduction of the rotor gear--the left planetary gear, the left planetary gear--the right planetary gear, and the right planetary gear--the sun gear, make this gear reduction mechanism have a very big reduction ratio, and greatly increase the torque outputted by the motor to the bike hub.

In this example, the sun gear 10 is a unidirectional clutch having the existing conventional structure, which includes a clutch inner ring 10a and a clutch outer ring 10b locked unidirectionally thereto, wherein the clutch inner ring 10a is secured to the hub shell 2 (while the clutch outer ring 10b is not connected to the hub shell 2 directly), and a gear tooth 10c engaged with the right planetary gear 9 is formed on the clutch outer ring 10b. Only when the clutch outer ring 10b rotates clockwise in the right viewing direction shown in Fig. 1, can it drive the clutch inner ring 10a to rotate clockwise therewith synchronously, while the clockwise rotation of the clutch inner ring 10a in the right viewing direction shown in Fig. 1 will not drive the clutch outer ring 10b to rotate. There is the following advantage for the sun gear 10 to use this structure: When the electric bike skids forward (here the hub shell 2 rotates clockwise in the right viewing direction shown in Fig. 1), the hub shell 2 will not drive the rotor 4 to rotate, which reduces the skidding resistance of the bike.

In order to further reduce the skidding resistance of the electric bike, this example also uses the following structure: The left planetary gear 8 is mounted on the planetary axle 7 through a planetary gear unidirectional clutch 21, which also uses the existing conventional structure that includes a planetary gear clutch inner ring (not labeled in Fig. 1) and a planetary gear clutch outer ring (not labeled in Fig. 1) locked unidirectionally thereto, wherein the planetary gear clutch inner ring is secured to the planetary axle 7, and the planetary gear clutch outer ring is secured to the left planetary gear 8. Only when the planetary gear clutch outer ring rotates counterclockwise in the right viewing direction shown in Fig. 1, can it drive the planetary gear clutch inner ring to rotate counterclockwise therewith synchronously, while the counterclockwise rotation of the planetary gear clutch inner ring in the right viewing direction shown in Fig. 1 will not drive the planetary gear clutch outer ring to rotate.

A second major key improvement of this electric-biker hub motor of this example is that this hub motor also has a multi-speed powering function and a multi-speed inner shift function, which are achieved in the following way:
The spindle 1 is rotatably fitted through a bearing (not labeled in Fig. 1) with a swivel 11 between the clutch inner ring 10a and the spindle 1; this swivel 11, whose right end extends out of the hub shell 2 and has a chain wheel 12, is also provided with two swivel gears 13 of different diameters that can rotate circumferentially around the swivel but cannot move axially, with a locking mechanism also provided between the swivel 11 and the swivel gear 13 that can secure them both together circumferentially; and a power planetary gear 20 engaged with the swivel gear 13 is also secured on the planetary axle 7. It should be noted that, the number of the swivel gear 13 is not limited to two, but can also be one, three, four....

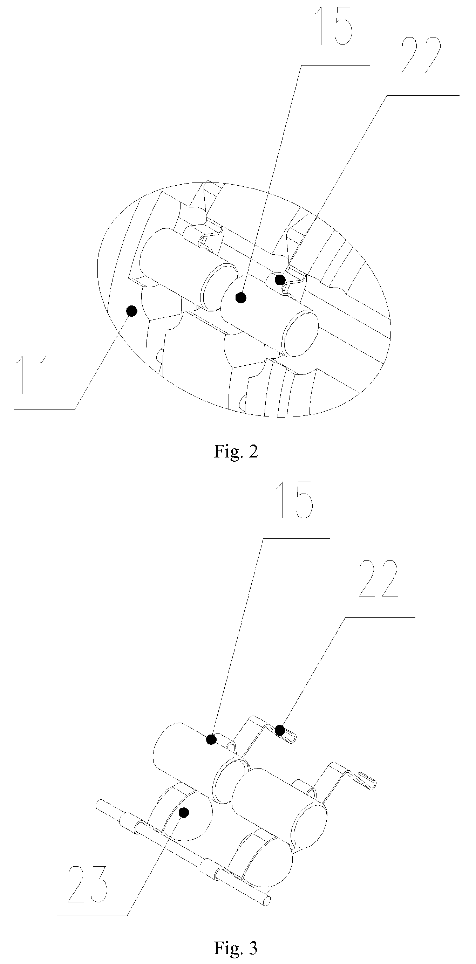

The locking mechanism having the above function can use various structures well known in the mechanical field. In this example, the locking mechanism uses the following structure: As shown in Figs. 1 to 3, the locking mechanism includes a sliding bush 14 sleeved axially slidably on the spindle 1, and a sliding positioning device that is used to drive the sliding bush to slide axially on the spindle and can position the sliding bush axially on the spindle. The sliding bush 14 is located in the swivel 11, which is provided in a position corresponding to the clutch inner ring 10a and each of the swivel gears 13 with a corresponding radial through hole, where a spring strip 22 locked on the swivel 11 is provided; the spring strip 22 is provided with a roller 15 that is locked outside this spring strip, and is provided inside with a ball 23 that is located in the radial through hole and can move radially along the radial through hole. The swivel gear 13 and the clutch inner ring 10a are both provided with a fit groove corresponding to the roller 15. The sliding bush 14 is provided with a convex ring 14a that, when the sliding bush slides axially on the spindle 1, can move outward along the radial through hole by abutting the ball 23 and then press the spring strip 22 to deform, so that the roller 15 secured on the spring strip 22 moves into the fit groove, thereby making the swivel gear or the clutch inner ring secured to the swivel circumferentially.

The sliding positioning device having the above function can use various structures well known in the mechanical field, such as an electromagnetic valve. In this example, the sliding positioning device uses the following structure: The sliding positioning device includes a setting bolt spring 17 sandwiched between the spindle 1 and the sliding bush 14, a central axial hole 18 provided on the spindle 1, a thimble 22 arranged in the central axial hole 18 and connected with the sliding bush 14, and a paddle (not shown in the figures) that is fitted in contact with the thimble and used for poking the thimble to make it move axially in the central axial hole 18, with the paddle connected in transmission to a gear change hand lever (not shown in the figures) on an electric bike handlebar through a shift cable (not shown in the figures).

When the motor is powered on to drive the hub to rotate clockwise to drive the bike to run forward, the rider can mobilize the gear change hand lever on the handlebar and drives the paddle to act through the shift cable, with the paddle then pushing the thimble 22 to move leftward in Fig. 1 along the central axial hole 18 of the spindle 1, thereby pushing the sliding bush 14 to move quantitatively along the spindle 1; alternatively, under the action of the elastic force of the setting bolt spring 17, the sliding bush 14 and the thimble 16 are pushed to move rightward in Fig. 1 along the central axial hole 18 of the spindle 1. With the quantitative movement of the sliding bush 14 and the convex ring 14a thereon in a plurality of positions, the ball 23 in any position of the swivel 11 is made to move outward radially (the rider himself/herself can select by controlling the gear change hand lever), and then presses the spring strip 22 to deform. The spring strip 22, after deformation, has a tendency to drive the roller 15 secured thereto to move outward; once the swivel 11 rotates to a corresponding angular position, the roller 15, under the action of the deforming elastic force of the spring strip 22, will partially enter the fit groove with the rest part still in the swivel 11, thus making the corresponding clutch inner ring 10a or a certain swivel gear 13 locked circumferentially to the swivel 11. Certainly, we can also specially set the groove type of the fit groove, so as to allow the outer tooth ring to be locked only unidirectionally to the clutch outer ring 10b, with its structure and principle similar to the wedge-type unidirectional clutch and no longer described here in detail. While those balls 23 without contact with the convex ring 14a remain in place and will not move outward, and the corresponding roller 15 will then not extend into the fit groove, thus not having the circumferential locking function. At this point the rider pedals a bike pedal to drive the chain wheel 12 to rotate clockwise in the right viewing direction shown in Fig. 1, and then the chain wheel drives the swivel 11 as well as the swivel gear 13 or clutch inner ring 10a locked circumferentially to this swivel 11 to rotate clockwise. Wherein the swivel gear 13 can apply to the hub shell 2 the extra clockwise torsional moment in addition to the motor rotor through the power planetary gear 20 engaged therewith, while the clutch inner ring 10a applies directly to the hub shell 2 the extra clockwise torsional moment in addition to the motor rotor. It is thus clear that whether the rider selects through the gear change hand lever to make the swivel 11 secured circumferentially to the clutch inner ring 10a, or selects to make the swivel 11 secured circumferentially to a certain swivel gear 13, the rider can help the motor rotor 4 drive the hub shell 2 to rotate clockwise by providing artificial power to the motor. Because the respective swivel gears 13 have different diameters, when the rider selects to make the swivel 11 secured circumferentially to the clutch inner ring 10a or the different swivel gears 13, the amount of the artificial power provided by the rider to this hub motor is then also different, thus achieving the multi-speed powering function of this hub motor.

When this hub motor is powered off to leave the bike in a power-off riding mode, for the same reason, the rider can also mobilize the gear change hand lever on the handlebar, so as to make the clutch inner ring 10a or one of the swivel gears 13 locked circumferentially to the swivel 11. At this point the rider pedals a bike pedal to drive the chain wheel 12 to rotate clockwise in the right viewing direction shown in Fig. 1, and then the chain wheel drives the swivel 11 as well as the swivel gear 13 or clutch inner ring 10a secured circumferentially to this swivel 11 to rotate clockwise, and then drives the hub shell 2 to rotate clockwise, thus making the bike run forward. It is thus clear that the rider, whether selecting through the gear change hand lever to make the swivel 11 secured circumferentially to the clutch inner ring 10a, or selecting to make the swivel 11 secured circumferentially to a certain swivel gear 13, can drive the hub shell 2 to go clockwise forward. If the rider pedals the pedal at a constant rotational speed, because the respective swivel gears 13 differ from one another in diameter, when the rider selects to make the swivel 11 secured circumferentially to the clutch inner ring 10a or the different swivel gears 13, the rotational speed of the hub shell 2 is then also different, thus achieving the multi-speed inner shift function of this hub motor. Generally, if the rider pursues the forward speed of the bike, he/she can select a gear position where the clutch inner ring 10a is secured circumferentially to the swivel 11; if the rider pursues the gradeability of the bike, he/she can select a gear position where the swivel gear 13 having the smallest diameter is secured circumferentially to the swivel 11.

It is thus clear that the spindle 1, the swivel 11, the swivel gear 13 and the locking mechanism then compose the clutch device of the present invention, which has a plurality of clutch gears (i.e. swivel gears) of different diameters; in actual use, the user can adjust the locking mechanism to select the desired swivel gear to secure circumferentially to the swivel according to the needs of the user, so as to obtain the reduction ratio and output torque desired by the user. If the swivel 11 is desired to be able to rotate only unidirectionally around the spindle 1 (clockwise or counterclockwise) rather than bi-directionally, another unidirectional clutch can also be additionally added between the swivel 11 and the spindle 1, with the swivel 11 and the spindle 1 secured to the clutch outer ring and the clutch inner ring of the another unidirectional clutch, respectively.

In order to prevent high-speed sliding friction between the pin 15 and the sliding bush 14 produced due to their direct contact and relative movement during the rotational movement of the swivel 11 and the pin 15 thereon, this example also uses the following structure: Between the sliding bush 14 and the spindle 1 is provided a supporting bearing (not shown in the figures), which has a relatively rotatable bearing inner ring and bearing outer ring (the conventional structure of bearings), the sliding bush 14 being secured to the bearing outer ring, the bearing inner ring being axially slidably sleeved on the spindle 1. Certainly, the sliding bush 14 can also be axially slidably sleeved on the bearing outer ring, with the bearing inner ring secured on the spindle 1, which can also achieve the same effects as above.

In order to ensure the connection strength between the sun gear 10 and the hub shell 2 so as to prevent deformation of the unidirectional clutch inner ring 10a, a supporting ball 19 is also mounted between the unidirectional clutch inner ring 10a and the swivel 11 in this example.

In this example, the diameter of the right planetary gear 9 and the power planetary gear 20 is less than that of the left planetary gear 8.

"Radial" and "axially" in this example are mentioned with respect to the spindle 1. Certainly, the above example is used only for explaining the technical concept and characteristics of the present invention. It is provided to make people understand the present invention and implement the same, rather than limit the scope of protection of the present invention. Any equivalent alteration or modification made according to the spiritual essence of the primary technical solution of the present invention should fall within the scope of protection of the present invention.

## Claims

1. A clutch device, **characterized in that**: it comprises a spindle (1) that is rotatably fitted with a swivel (11) through a bearing; the swivel (11) is also provided with at least two swivel gears (13) of different diameters that can rotate circumferentially around the swivel but cannot move axially, with a locking mechanism also provided between the swivel (11) and the swivel gear (13) that can secure them both together circumferentially.

2. The clutch device according to claim 1, **characterized in that**: the locking mechanism includes a sliding bush (14) that can be slidably sleeved axially on the spindle (1), and a sliding positioning device that is used to drive the sliding bush to slide axially on the spindle and can position the sliding bush axially on the spindle, with the sliding bush (14) located in the swivel (11); the swivel (11) is provided in a position corresponding to each of the swivel gears with a corresponding radial through hole, which is provided with a spring strip (22) locked on the swivel (11); the spring strip (22) is provided with a roller (15) that is locked outside this spring strip, and is provided inside with a ball (23) that is located in the radial through hole and can move radially along the radial through hole, with the swivel gear (13) provided with a fit groove corresponding to the roller (15); the sliding bush (14) is provided with a convex ring (14a) that, when the sliding bush slides axially on the spindle (1), can move outward along the radial through hole by abutting the ball (23) and then press the spring strip (22) to deform, so that the roller (15) secured on the spring strip (22) moves into the fit groove, thereby making the swivel gear (13) secured to the swivel (11) circumferentially.

3. The clutch device according to claim 2, **characterized in that**: the sliding positioning device includes a setting bolt spring (17) sleeved on the spindle (1) and sandwiched between the spindle (1) and the sliding bush (14), a central axial hole (18) provided on the spindle (1), a thimble arranged in the central axial hole (18) and connected to the sliding bush (14), and a paddle that is fitted in contact with the thimble and used for poking the thimble to make it move axially in the central axial hole (18), with the paddle connected in transmission to a gear change hand lever through a shift cable.

4. The clutch device according to claim 2, **characterized in that**: the sliding positioning device is an electromagnetic valve.

5. The clutch device according to claim 2, 3 or 4, **characterized in that**: between the sliding bush (14) and the spindle (1) is provided a supporting bearing, which has a relatively rotatable bearing inner ring and bearing outer ring, the sliding bush (14) being secured to the bearing outer ring, the bearing inner ring being axially slidably sleeved on the spindle (1).

6. The clutch device according to claim 2, 3 or 4, **characterized in that**: between the sliding bush (14) and the spindle is provided a supporting bearing, which has a relatively rotatable bearing inner ring and bearing outer ring, the sliding bush (14) being axially slidably sleeved on the bearing outer ring, the bearing inner ring being secured on the spindle (1).

7. The clutch device according to claim 1, 2, 3 or 4, **characterized in that**: there are totally two swivel gears (13).

8. The clutch device according to claim 1, 2, 3 or 4, **characterized in that**: between the swivel (11) and the spindle (1) is provided a unidirectional clutch, which has a clutch inner ring and a clutch outer ring locked unidirectionally thereto, the clutch outer ring being secured to the swivel (11), the clutch inner ring being secured to the spindle (1).
